# FASCICULE DE BREVET EUROPEEN

(11) **EP 4 341 471 B1**
(45) Date de publication et mention de la délivrance du brevet: **16.09.2026**
(21) Numéro de dépôt: 22727372.9
(22) Date de dépôt: 09.05.2022
(51) Int. Cl.: D01F 6/62, D01F 1/10, D01F 6/86, C08G 63/672, C08G 63/181, C08G 63/199, C08G 63/78, C08G 63/85

(54) **MONOFILAMENT ÉLÉMENTAIRE TEXTILE CONSTITUÉ D'UN POLYESTER**
ELEMENTARES TEXTIL MONOFILAMENT BESTEHEND AUS EINEM POLYESTER
ELEMENTARY TEXTILE MONOFILAMENT CONSISTING OF A POLYESTER

(30) Priorité: 18.05.2021 FR 2105152
(43) Date de publication de la demande: 27.03.2024
(73) Titulaire: COMPAGNIE GENERALE DES ETABLISSEMENTS MICHELIN, 63000 Clermont-Ferrand (FR); Centre National de la Recherche Scientifique, 75794 Paris Cedex 16 (FR); Institut National des Sciences Appliquées de Lyon, 69621 Villeurbanne Cedex (FR); Université Claude Bernard Lyon 1, 69622 Villeurbanne Cedex (FR); Université Jean Monnet Saint-Étienne, 42023 Saint-Étienne Cedex 2 (FR)
(72) Inventeur: SUTTER, Marc, 63040 CLERMONT-FERRAND Cedex 9 (FR); LE CLERC, Christophe, 63040 CLERMONT-FERRAND Cedex 9 (FR); POLONI, Mélissa, 69621 VILLEURBANNE CEDEX (FR); COLELLA, Marion, 69621 VILLEURBANNE CEDEX (FR); BERNARD, Julien, 69621 VILLEURBANNE Cedex (FR); ROUSSEAU, Alain, 69621 VILLEURBANNE Cedex (FR)
(74) Mandataire: M.F.P. Michelin
(86) Numéro de dépôt international: PCT/FR2022/050879
(87) Numéro de publication internationale: WO 2022/243621

(56) Documents cités:
- CN-A- 108 129 644
- US-A1- 2017 015 780

## Description

### Domaine technique de l'invention

La présente invention est relative au domaine des fils textiles en polyesters et des procédés de fabrication de tels fils polyesters.

### Art antérieur

Les polyesters connaissent de nombreuses applications dans les domaines industriels et textiles en particulier pour la production de fibres à destination de l'habillement. Leur variété d'application est telle que les volumes produits chaque année sont très importants. Aussi, il est d'intérêt de synthétiser des polyesters à partir de monomères issus de ressources renouvelables, et présentant des caractéristiques techniques permettant de les substituer à des polyesters pétrosourcés tels que le polytéréphtalate d'éthylène (PET).

De nombreuses recherches ont été menées pour produire des polyesters à partir de monomères furanedicarboxylate. Ces derniers peuvent en effet être produits à partir de ressources naturelles telles que des sucres. La synthèse du polyester comprend typiquement une étape d'estérification et une étape de polycondensation, éventuellement suivie d'étapes de cristallisation et de post-condensation à l'état solide afin d'ajuster les propriétés du polyester. De la conduite de ces différentes étapes dépend la structure, et donc les caractéristiques, du polyester obtenu.

Par exemple, la demande WO 2015/137805 décrit un polyester de type polyéthylène furanoate (PEF) présentant un faible taux de motifs diéthylène glycol et son procédé de synthèse. La synthèse comprend en particulier des étapes d'estérification, en présence d'un composé suppresseur de la formation de diéthylène glycol, et de polycondensation. La présence de ce composé suppresseur permet d'obtenir une quantité de motifs diéthylène glycol dans le PEF très faible et ainsi d'améliorer la température de fusion et le taux de cristallinité des polyesters obtenus.

La demande WO2013/055860 décrit un polyester comprenant des motifs acide dicarboxylique et des motifs glycol dont la température de transition vitreuse est relativement stable sur une large gamme de composition du polyester. Cette demande évoque de nombreuses utilisations possibles d'un tel polyester, notamment en tant que fibre, mais n'enseigne pas comment conférer auxdites fibres des propriétés mécaniques d'intérêt.

D'autres travaux ont décrit des copolyesters à base d'acide furanedicarboxylique comprenant des diols de type cyclohexanediméthanol et/ou éthylène glycol, susceptibles d'être utilisés notamment dans des applications de fibres ou de films, mais sans enseignement spécifique portant sur l'obtention de monofilaments textiles présentant simultanément une température de fusion élevée et des propriétés mécaniques adaptées aux contraintes d'un usage textile (voir par exemple CN 108 129 644 A et US 2017/015780 A1).

Poursuivant ses recherches, la demanderesse a découvert un monofilament élémentaire textile ayant une température de fusion et une ténacité élevées, particulièrement adapté à être utilisé pour la confection de tissus. Ce monofilament élémentaire textile peut être obtenu par l'association d'étapes et de conditions opératoires particulières qui constituent une amélioration des procédés connus de l'art antérieur.

### Description détaillée de l'invention

L'invention concerne un monofilament élémentaire textile constitué d'un polyester à base d'unités furanedicarboxylate. Le polyester mis en œuvre peut être représenté par la formule générale (I), issue de la polycondensation de motifs dérivés de l'éthylène glycol et du cyclohexanediméthanol avec un dérivé de type acide furanedicarboxylique.

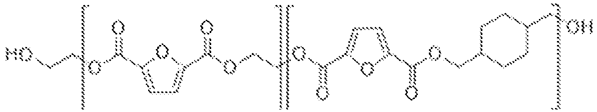

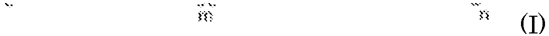

Dans cette formule, m représente le nombre total de motifs éthylène glycol furanedicarboxylate et n représente le nombre total de motifs cyclohexanediméthanol furanedicarboxylate, n étant non nul et la somme m + n étant supérieure ou égale à 25. Le ratio molaire entre les motifs éthylène glycol, notés EG, et les motifs cyclohexanediméthanol, notés CHDM, est compris entre 0:100 mol/mol et 20:80 mol/mol.

Le monofilament élémentaire textile obtenu à partir de ce polyester présente une température de fusion d'au moins 240 °C, mesurée selon la norme ISO 11357-3, ainsi qu'une ténacité d'au moins 2,5 cN/tex et un allongement à la rupture d'au moins 10 %, mesurés selon la norme ASTM D885-03. Le polyester constitutif du monofilament présente en outre une masse molaire moyenne en poids supérieure à 45 000 g/mol en équivalent PMMA, mesurée par chromatographie d'exclusion stérique, et de préférence supérieure à 55 000 g/mol.

10 Dans certaines mises en œuvre, le polyester présente une viscosité intrinsèque supérieure à 0,7 dL/g, et de préférence supérieure à 0,8 dL/g. Il peut également présenter une dispersité limitée, caractérisée par un rapport Mw/Mn inférieur à 2,5, et de préférence inférieur à 2,0, traduisant une distribution resserrée des masses molaires. Le ratio molaire entre les motifs éthylène-glycol et les motifs cyclohexanediméthanol peut, dans des formes préférées de réalisation, être ajusté dans des plages comprises entre 4:96 mol/mol et 15:85 mol/ mol, afin d'optimiser le compromis entre rigidité thermique et propriétés mécaniques du monofilament. Dans des applications textiles exigeantes, le monofilament présente avantageusement une ténacité supérieure ou égale à 3 cN/tex et un allongement à la rupture supérieur ou égal à 15 %. Le retrait du monofilament est dans ce cas limité, inférieur à 14 %, et de préférence inférieur à 12 %, ce qui améliore la stabilité dimensionnelle des structures textiles obtenues. Le monofilament peut en outre être revêtu d'une ou de plusieurs couches d'un revêtement à base d'une composition adhésive non métallique, notamment afin d'améliorer son incorporation dans des structures textiles ou composites. L'invention concerne également des tissus comprenant au moins un tel monofilament élémentaire textile.

L'invention concerne également un procédé de préparation d'un monofilament élémentaire textile constitué d'un polyester à base d'unités furanedicarboxylate. Ce procédé comprend une étape de transestérification d'une composition comprenant un composé de type furanedicarboxylate, noté RFC, pouvant être représenté par la formule générale (II) ci-après.

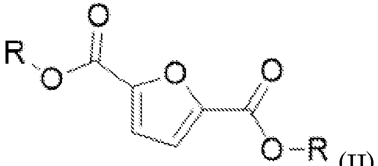

Dans cette formule, R' représente un groupe alkyle comprenant de un à trois atomes de carbone ou l'atome d'hydrogène. La composition soumise à la transestérification comprend en outre au moins un composé glycol choisi parmi le 1,4-cyclohexanediméthanol ou un mélange de 1,4-cyclohexanediméthanol et d'éthylène-glycol. L'étape de transestérification est mise en œuvre à une température croissant selon une rampe contrôlée d'au moins 1 °C/min dans un intervalle allant de 180 °C à 280 °C. Le ratio molaire entre les composés glycol et le composé furanedicarboxylate est compris entre 1,1 et 2, et de préférence entre 1,1 et 1,2. Cette étape est réalisée en présence d'un catalyseur acide de Lewis.

Après la transestérification, le procédé comprend une étape de polycondensation en milieu fondu, réalisée à une température supérieure ou égale à 260 °C et sous pression réduite, typiquement inférieure à 50 mbar, afin d'obtenir le polyester. À l'issue de cette étape, la teneur en 1,4-cyclohexanediméthanol est telle que le ratio molaire entre les motifs éthylène-glycol et les motifs cyclohexanediméthanol dans le polyester obtenu se situe dans la plage allant de 0:100 mol/mol à 20:80 mol/ mol. Le polyester ainsi obtenu est ensuite mis en forme par filage afin d'obtenir un monofilament élémentaire textile.

Dans certaines mises en œuvre, lorsque le composé RFC est de formule (II), le groupe R représente de préférence un groupe alkyle comprenant un ou deux atomes de carbone.

L'étape de transestérification peut être conduite pendant une durée comprise entre 1 et 5 heures, et de préférence entre 1 et 3 heures. La montée en température au cours de cette étape peut être réalisée de manière continue selon une rampe inférieure ou égale à +5 °C/min. Le catalyseur acide de Lewis utilisé peut notamment être choisi parmi l'acétylacétonate d'hafnium, l'acétylacétonate de zirconium, le tétraisopropoxyde de titane et le tétrabutoxyde de titane, ce dernier étant particulièrement avantageux.

La transestérification peut être réalisée sous une pression comprise entre 1,5 et 8 bar, et de préférence entre 1500 et 8000 mbar. La polycondensation peut quant à elle être réalisée à une température supérieure ou égale à 270 °C, et de préférence supérieure ou égale à 280 °C.

Après la polycondensation, le procédé peut comprendre une étape de mise en forme intermédiaire au cours de laquelle le polyester est refroidi rapidement par mise en contact avec de l'eau, puis découpé en granulés. Ces granulés peuvent ensuite être séchés à une température comprise entre 80 °C et 100 °C, à une pression inférieure ou égale à la pression atmosphérique, sous atmosphère inerte.

Selon la composition du polyester issue de la transestérification, une étape de cristallisation peut être mise en œuvre.

Lorsque la composition ne comprend pas **d'éthylène-glycol,** cette étape de cristallisation est réalisée à une température comprise entre 120 °C et la température de fusion du polyester, de préférence entre 130 °C et 150 °C, pendant une durée comprise entre 15 minutes et 2 heures. Lorsque la composition comprend de l'éthylène-glycol, la cristallisation est réalisée à une température comprise entre 220 °C et la température de fusion du polyester, et de préférence entre 220 °C et 230 °C, pendant une durée comprise entre 10 minutes et 2 heures. Cette étape peut être suivie d'une post-condensation en phase solide, réalisée à une température croissant dans un intervalle allant de 200 °C à 260 °C pendant une durée comprise entre 1 et 60 heures.

Dans des mises en œuvre préférées, la post-condensation en phase solide est réalisée à une température croissant dans l'intervalle allant de 210 °C à 260 °C, et de préférence entre 220 °C et 250 °C, pendant une durée comprise entre 24 et 72 heures, sous flux de gaz inerte. La température peut être augmentée par paliers successifs compris entre 2 °C et 10 °C.

Le filage du polyester est réalisé à une température supérieure à la température de fusion du polyester, la pression en entrée de filière étant ajustée de manière à se situer entre 3,3 et 10,0 MPa. Le filage peut être suivi d'une étape d'étirage réalisée sur une série de godets d'étirage, chaque godet étant maintenu à une température comprise entre 40 °C et 160 °C, avec un taux d'étirage compris entre 3 et **6.** Dans certaines mises en œuvre, le filage et l'étirage sont réalisés en continu, sans bobinage intermédiaire. Les premiers godets d'étirage peuvent être maintenus à une température comprise entre 90 °C et 160 °C, et de préférence entre 105 °C et 145 °C, tandis que la température du dernier godet est comprise entre 40 °C et 80 °C afin de réaliser une étape de relaxation. La vitesse finale de bobinage est comprise entre 500 et 5000 m/min, et de préférence entre 1000 et 3000 m/min.

### Définitions

Les composés comprenant du carbone mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les polymères, les plastifiants, les charges, etc.

Tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Les pressions sont, sauf mention contraire explicite, exprimées en valeur absolue.

### Polyester selon l'invention

L'invention concerne un monofilament élémentaire textile constitué d'un polyester de formule (I) 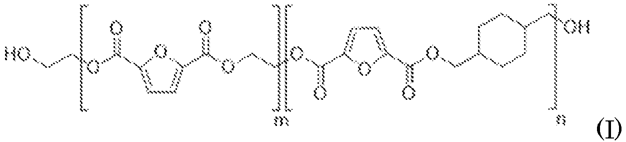 issu de la condensation des monomères éthylène glycol, noté EG, et cyclohexanediméthanol, noté CHDM, représentés dans la figure (II) 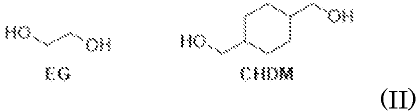 dans laquelle m représente le nombre total de motifs éthylène glycol furanedicarboxylate, et n le nombre total de motifs cyclohexanediméthanol furanedicarboxylate, avec n non nul et m+n ≥ 25, préférentiellement m+n ≥ 35, le ratio molaire entre les motifs éthylène glycol et les motifs cyclohexanediméthanol (CHDM) allant de 0:100 mol/mol et 20:80 mol/mol, ledit monofilament élémentaire textile présentant une température de fusion Tf supérieure ou égale à 240°C, préférentiellement supérieure ou égale à 245°C, une ténacité supérieure ou égale à 2,5 cN/tex, préférentiellement supérieure ou égale à 3 cN/tex, et un allongement à la rupture supérieur ou égal à 10%.

Le polyester du monofilament élémentaire textile selon l'invention peut ou non comprendre des motifs éthylène glycol. Dans le cas où le polyester ne comprend pas de motifs éthylène glycol, il s'agit d'un poly(1,4-cyclohexanediméthylène 2,5-furanedicarboxylate), noté PCF. Dans le cas où le polyester comprend des motifs éthylène glycol, il s'agit d'un poly(éthylène-co-1,4-cyclohexanediméthylène 2,5-furanedicarboxylate), noté PECF, « co » signifiant copolymère.

Le cycle furanique représente au moins 25% poids du polyester du monofilament élémentaire textile selon l'invention.

La masse molaire moyenne en poids du polyester du monofilament élémentaire textile selon l'invention, mesurée après que le polyester a été mis sous forme de granulé de la manière décrite dans la présente, est supérieure à 45 000 g/mol en équivalent PMMA, très préférentiellement supérieure à 55 000 g/mol.

Le polyester du monofilament élémentaire textile selon l'invention présente préférentiellement une viscosité intrinsèque, mesurée après que le polyester a été mis sous forme de granulé de la manière décrite dans la présente, supérieure à 0,7 dL/g, très préférentiellement supérieure à 0,8 dL/g.

Le polyester du monofilament élémentaire textile selon l'invention présente préférentiellement une dispersité, mesurée après que le polyester a été mis sous forme de granulé de la manière décrite dans la présente, notée D et représentant le ratio de la masse molaire moyenne en poids sur la masse molaire moyenne en nombre (D=Mw/Mn) inférieure à 2,5, de préférence inférieure à 2,0.

L'enthalpie de fusion du polyester selon l'invention est préférentiellement supérieure à 40 J/g.

Conformément à l'invention, le ratio molaire entre les motifs éthylène glycol et les motifs cyclohexanediméthanol dans le polyester va de 0:100 mol/mol à 20:80 mol/mol. Un tel ratio, associé aux autres caractéristiques du polyester, permet d'obtenir des propriétés thermomécaniques telles que température de fusion, ténacité, allongement à rupture du monofilament particulièrement intéressantes. De manière préférée, le polyester est un PECF dans lequel le ratio molaire entre les motifs éthylène glycol et les motifs cyclohexanediméthanol va de 4:96 mol/mol à 15:85 mol/mol.

De manière préférée, le monofilament élémentaire textile présente un retrait inférieur à 14%, préférentiellement inférieur à 12%, inférieur à celui de filaments de PEF de l'état de la technique qui est en général de l'ordre de 15 à 30% avant toute étape de thermofixation.

Par monofilament élémentaire, on entend un élément présentant une longueur au moins 10 fois plus grande que la plus grande dimension de sa section quelle que soit la forme de cette dernière : circulaire, elliptique, oblongue, polygonale, notamment rectangulaire ou carrée ou ovale. Dans le cas d'une section rectangulaire, le monofilament présente la forme d'une bande.

Le monofilament élémentaire textile peut être éventuellement revêtu d'une ou plusieurs couches d'un revêtement à base d'une composition adhésive non métallique. Ce monofilament élémentaire textile est obtenu, par exemple, par filage au fondu, filage en solution ou filage de gel. Chaque monofilament élémentaire textile présente une section sensiblement circulaire présentant un diamètre allant par exemple de 2 µm à 100 µm.

Un élément filaire textile peut être un assemblage de plusieurs monofilaments élémentaires textiles tels que définis ci-dessus, également appelé brin. Un brin comprend de préférence plus de 10 monofilaments élémentaires textiles, de préférence plus de 100 monofilaments élémentaires textiles et plus préférentiellement plus de 500 monofilaments élémentaires textiles.

Un élément filaire textile peut également être un assemblage de plusieurs brins tels que définis ci-dessus. Cet assemblage peut se faire par une étape de torsion ou une succession d'étapes de torsion (retordage). Cet assemblage peut être composé uniquement des éléments filamentaires de l'invention ou partiellement composé de ces filaments constituant ainsi un assemblage hybride.

La couche à base d'une composition adhésive non métallique est, dans un mode de réalisation, formée par une couche d'un primaire d'adhésion permettant d'améliorer l'adhésion de l'élément filaire, par exemple à une matrice élastomérique. De tels primaires d'adhésion sont ceux couramment utilisés par l'homme du métier pour le pré-encollage de certaines fibres textiles (notamment fibres en polyester, par exemple PET, en aramide, en aramide/nylon). Par exemple, on pourra utiliser un primaire à base d'époxy, notamment à base de polyglycérol polyglycidyl éther. On pourra également utiliser un primaire à base d'isocyanate bloqué.

La couche à base d'une composition adhésive non métallique est, dans un autre mode de réalisation, formée par une couche à base d'une résine et d'un latex d'élastomère(s). On citera les compositions adhésives de type RFL (Résorcinol - Formaldéhyde - Latex) mais également les compositions adhésives telles que décrites dans WO2015118041.

Dans encore un autre mode de réalisation, on pourra avoir une couche d'un primaire d'adhésion revêtant l'élément filaire, cette couche de primaire d'adhésion étant elle-même revêtue d'une couche à base d'une résine et d'un latex d'élastomère(s).

### Tissu

L'invention concerne également un tissu comprenant au moins un monofilament élémentaire textile selon l'invention.

Au sein du tissu, le monofilament élémentaire textile est préférentiellement mis en œuvre sous forme d'un fil comprenant un ou plusieurs monofilaments élémentaires textiles selon l'invention.

Dans la présente, on entend par tissu une étoffe constituée de plusieurs fils assemblés par tissage, tricotage, collage ou tout autre moyen connu de l'Homme du métier.

### Procédé selon l'invention de synthèse d'un polyester

### Étape de transestérification

Le procédé selon l'invention comprend une étape de transestérification d'une composition comprenant un composé de type furanedicarboxylate, noté RFC, de formule générale (II) : 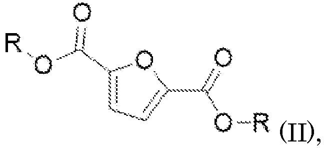 dans laquelle R représente un groupe alkyle comprenant de 1 à 3 atomes de carbone ou l'atome d'hydrogène, la composition comprenant également au moins un composé glycol choisi parmi le 1,4-cyclohexane diméthanol et le mélange de 1,4-cyclohexane diméthanol et d'éthylène glycol, cette étape de transestérification étant opérée à une température croissant selon une rampe d'au moins 1°C/min dans l'intervalle allant de 180°C à 280°C, avec un ratio molaire composés glycol/RFC allant de 1,1 à 2, préférentiellement allant de 1,1 à 1,2, en présence d'un catalyseur acide de Lewis.

Par transestérification, on entend dans la présente aussi bien transestérification lorsque R représente un groupe alkyle comprenant de 1 à 3 atomes de carbone, qu'estérification lorsque R représente l'atome d'hydrogène.

L'étape de transestérification permet de produire des oligomères de formule générale (I), ces oligomères étant des oligomères de 1,4-cyclohexanediméthylène 2,5-furanedicarboxylate lorsque la composition ne comprend pas d'éthylène glycol (donc m=0), ou des oligomères de ethylène-co-1,4-cyclohexanediméthylène 2,5-furanedicarboxylate lorsque la composition comprend de l'éthylène glycol. Les conditions opératoires de cette étape ont une influence déterminante sur la structure du polyester obtenu. Dans la composition alimentant cette étape, le ratio molaire composés glycol/RFC va de 1,1 à 2, préférentiellement de 1,1 à 1,2.

De manière préférée, R représente un groupe alkyle comprenant de 1 à 2 atomes de carbone. Le composé de formule générale (II) correspond alors au diméthyl-2,5-furanedicarboxylate, ou au diéthyl-2,5-furanedicarboxylate.

L'utilisation d'un tel composé permet de réduire notablement la dispersité D du polyester obtenu.

L'étape de transestérification est réalisée pendant une durée allant préférentiellement de 1 à 5 h, de manière préférée allant de 1 à 3 h.

Conformément à l'invention, l'étape de transestérification est opérée à une température croissant continûment dans l'intervalle allant de 180°C à 280°C. Par « croissant continûment dans l'intervalle allant de 180°C à au moins 280°C », on entend que l'étape de transestérification est opérée à une température comprise dans l'intervalle de température allant de 180°C à 280°C, la température d'opération étant croissante au cours de l'étape de transestérification, sans diminution. La mise en œuvre d'un profil de température croissant permet d'éviter toute cristallisation prématurée dans l'étape de transestérification, qui serait préjudiciable au produit final.

Dans un arrangement préféré, la température croît continûment dans l'intervalle allant de 180°C à 280°C selon une rampe inférieure ou égale à +5°C/min. Lorsque la température la plus élevée est atteinte, un palier peut être maintenu jusqu'à ce que le taux de transestérification soit supérieur à 80%.

De manière préférée, la durée entre la température la plus faible et la plus élevée de l'étape de transestérification lorsque la température augmente de manière continue, est au moins égale à 30 min, préférentiellement au moins égale à 45 min.

L'étape de transestérification est préférentiellement opérée à une pression allant de 1,5 à 8 bar. De manière préférée, l'étape est opérée sous atmosphère inerte. L'opération à une pression préférentiellement allant de 1500 à 8000 mbar, permet d'opérer l'étape de transestérification en phase liquide tout en évacuant les produits de réactions tels que l'alcool (si R est différent de H) ou l'eau (si R est l'atome d'hydrogène).

L'étape de transestérification est opérée en présence d'un catalyseur acide de Lewis. De manière préférée, le catalyseur acide de Lewis est choisi parmi l'acétylacétonate d'hafnium, l'acétylacétonate de zirconium, le tétraisopropoxyde de titane (TIS) et le tétrabutoxyde de titane (TBT). De manière préférée, le catalyseur acide de Lewis est le tétrabutoxyde de titane (TBT).

L'étape de transestérification est opérée avec une teneur en catalyseur allant de 100 à 1000 ppm, préférentiellement allant de 150 à 500 ppm, et très préférentiellement allant de 200 à 450 ppm.

Ces conditions d'opération, avec une température croissant par paliers dans l'intervalle mentionné et en présence d'un catalyseur acide de Lewis, en particulier un catalyseur tel que le tétrabutoxyde de titane (TBT), permettent d'obtenir un taux de transestérification supérieur à 80%, voire supérieur à 90%, une quantité de fonctions ester situées en bout de chaîne inférieure à 100 meq/kg, de préférence inférieure à 80 meq/kg et de manière préférée inférieure à 30 meq/kg en fin de transestérification pour le prépolymère de polyester obtenu tout en évitant une cristallisation prématurée de certains oligomères. Le taux de transestérification est déterminé en divisant la masse d'alcool (ou d'eau lorsque R=H) issue de l'étape de transestérification par la masse théorique d'alcool (ou d'eau lorsque R=H) produite en considérant que l'ensemble des fonctions ester (ou acide lorsque R=H) du composé RFC ont réagi.

### Étape de polycondensation

Le procédé selon l'invention comprend une étape de polycondensation en milieu fondu opérée à une température supérieure ou égale à 260°C et une pression inférieure à 50 mbar de manière à obtenir un polyester de formule générale (I). À l'issue de cette étape, la somme m+n est préférentiellement comprise entre 25 et 200.

À l'issue de l'étape de transestérification, la pression est abaissée progressivement pendant une durée comprise entre 60 et 120 min, préférentiellement comprise entre 80 et 100 min pour atteindre la pression opératoire de l'étape de polycondensation. Lorsque la pression est inférieure à 400 mbar, de manière préférée inférieure à 300 mbar et de manière très préférée inférieure à 200 mbar, la température du milieu réactionnel est augmentée jusqu'à atteindre la température opératoire initiale de l'étape de polycondensation. La hausse de température jusqu'à la température opératoire initiale de l'étape de polycondensation est réalisée sur une durée allant de 15 à 45 min.

L'utilisation d'une faible pression opératoire, et notamment la phase de dépressurisation, permet d'évacuer progressivement l'éthylène glycol et le cyclohexanediméthanol présents dans le système réactionnel et d'augmenter la masse molaire du polymère. De manière préférée, l'étape de polycondensation est opérée à une température supérieure ou égale à 270°C, de préférence supérieure ou égale à 280°C. De manière préférée, l'étape de polycondensation est opérée à une pression inférieure à 50 mbar, de préférence aussi faible que possible, par exemple préférentiellement inférieure à 1 mbar.

L'étape de polycondensation est réalisée pendant une durée allant préférentiellement de 10 min à 5 h, de manière préférée allant de 10 min à 2 h. L'étape de polycondensation est opérée avec une teneur en catalyseur allant de 100 à 1000 ppm, préférentiellement allant de 150 à 500 ppm, et très préférentiellement allant de 200 à 450 ppm. Le catalyseur est en général ajouté au système réactionnel avant l'étape de transestérification. Un appoint en catalyseur, identique ou différent de celui utilisé lors de l'étape de transestérification, peut être fait si nécessaire lors de l'étape de polycondensation.

Le polyester obtenu à l'issue de cette étape, appelé polycondensat, peut ensuite être mis en forme, soit sous forme de granulés, soit sous forme d'un fil, soit sous forme d'un film. La mise sous forme de fil peut se faire au travers d'un système de filage, tel que connu de l'homme du métier, de manière à obtenir un fil utilisable en tant que tel, ou bien utilisable en assemblage de fils. La mise sous forme de fil peut se faire, par exemple, par passage sur une série de bobines contrôlées en température permettant d'étirer le fil jusqu'au diamètre désiré. La mise en forme sous forme d'un film peut se faire en passant le polycondensat sur une série de rouleaux refroidis de manière à former un film.

De manière préférée, le polycondensat est refroidi rapidement par mise en contact avec de l'eau et découpé en granulés. Cette mise en contact rapide permet de limiter l'agglomération des granulés entre eux. Cette étape de granulation est conduite de sorte à former des granulés substantiellement homogènes en taille, afin de faciliter les opérations ultérieures.

Dans cet arrangement préféré, les granulés sont ensuite séchés à une température allant de 80°C à 100°C à pression inférieure ou égale à la pression atmosphérique sous atmosphère inerte, par exemple sous atmosphère d'azote.

Le polyester obtenu à l'issue de l'étape de polycondensation est partiellement cristallisé.

Le polyester obtenu à l'issue de l'étape de polycondensation présente une viscosité intrinsèque supérieure ou égale à 0,50 dL/g. Cette viscosité intrinsèque est liée à la masse molaire du polyester, et est d'autant plus grande que la masse molaire du polyester est élevée. Ainsi, la masse molaire en poids du polyester obtenu à l'issue de cette étape, exprimée en équivalent PMMA, est préférentiellement supérieure à 35 000 g/mol. De manière préférée, la viscosité intrinsèque du polyester est supérieure ou égale à 0,55 dL/g.

### Étape de cristallisation

Suite à la mise en forme du polyester sous forme de granulés, on peut opérer une étape de cristallisation, lorsque la composition alimentant l'étape de transestérification ne comprend pas d'éthylène glycol, à une température allant de 120°C à la température de fusion du polyester, préférentiellement allant de 130°C à 150°C et une durée allant de 15 min à 2 h et opérée, lorsque la composition alimentant l'étape de transestérification comprend de l'éthylène glycol, à une température allant de 220°C à la température de fusion du polyester, préférentiellement allant de 220°C à 230°C et une durée allant de 10 min à 2 h.

### Étape de post-condensation à l'état solide

Afin d'augmenter la masse molaire moyenne en poids du polyester obtenu et sa température de fusion, on réalise avantageusement, suite à l'étape de cristallisation, une étape de post-condensation à l'état solide. Cette étape est mise en œuvre en chauffant le polyester à une température proche et inférieure à sa température de fusion sous flux de gaz inerte, préférentiellement sous flux d'azote.

Ainsi, l'étape de post-condensation en phase solide est opérée à une température croissant dans l'intervalle allant de 200°C à 260°C et une durée allant de 1 à 60 h. Préférentiellement, l'étape de post-condensation en phase solide est opérée à une température croissant dans l'intervalle allant de 210°C à 260°C, préférentiellement dans l'intervalle allant de 220°C à 250°C pendant une durée allant de 24 h à 72 h, préférentiellement de 24 h à 60 h. De manière préférée, la température de l'étape de post-condensation en phase solide est augmentée par paliers compris dans un intervalle allant de 2 à 10°C.

En opérant cette étape avec une température croissant dans l'intervalle allant de 210°C à 260°C, préférentiellement dans l'intervalle allant de 220°C à 250°C, de manière préférée en augmentant cette température par paliers compris dans un intervalle allant de 2 à 10°C, préférentiellement de 3 à 5°C, on maximise l'augmentation de la masse molaire et la température de fusion du polyester obtenu. Ainsi, le polyester obtenu présente une température de fusion de préférence supérieure à 240°C. De plus, et de manière surprenante, la zone de fusion, c'est-à-dire l'intervalle de température visible sur le thermogramme obtenu par DSC selon la méthode décrite plus loin dans la présente dans lequel la fusion est observée, est significativement réduite par rapport aux polyesters obtenus selon les procédés de l'art antérieur.

À l'issue de l'étape de post-condensation à l'état solide, la viscosité intrinsèque du polyester est augmentée, de préférence supérieure ou égale à 0,7 dL/g, et de manière préférée supérieure ou égale à 0,8 dL/g. Ainsi, la masse molaire moyenne en poids du polyester est préférentiellement supérieure à 45 000 g/mol en équivalent PMMA.

Dans le cas préféré où R est différent de l'atome d'hydrogène dans la formule (II), le polyester présente une dispersité D plus faible, préférentiellement inférieure à 2,5.

### Étape de mise en forme

Le polyester obtenu à l'issue de cette étape de post-condensation peut ensuite être mis en forme, en particulier sous forme d'un fil.

La mise sous forme de fil est réalisée par une étape de filage du polyester. Le polyester est placé dans une vis d'extrusion, à une température supérieure à la température de fusion du polyester, ajustée de sorte que la pression en entrée de filière soit comprise entre 3,3 et 10,0 MPa. A la sortie de la filière, le polyester s'écoulant est refroidi dans une chambre verticale et réceptionné sur une paire de godets à température ambiante tournant à une vitesse circonférentielle de 100 à 5000 m/min, préférentiellement de 300 à 3000 m/min, très préférentiellement de 300 à 500 m/min, la vitesse circonférentielle étant entendue comme la distance parcourue par un point de la surface externe du godet en contact avec le fil par unité de temps. Une étape d'étirage est ensuite réalisée en ligne sur une série de godets d'étirage, chaque godet d'étirage étant à une température allant de 105°C à 145°C, la température du dernier godet d'étirage allant de 40 à 80°C, le taux d'étirage, mesurant, de manière connue de l'Homme du métier, le rapport de vitesses entre le dernier godet avant enroulage et le premier godet de réception, allant de strictement plus de 3 à 6, préférentiellement allant de 3,1 à 5, très préférentiellement allant de 3,5 à 5. Préférentiellement, la vitesse finale de bobinage se situe entre 500 et 5000m/min préférentiellement entre 1000 et 3000m/min, cette vitesse correspondant à la vitesse du monofilament en sortie du dernier godet. La taille des filaments unitaires peut varier de 1 à 25 dpf (denier par filament), un denier correspondant à 1 g pour 9000 m de filament.

Un taux d'étirage strictement supérieur à 3, préférentiellement supérieur ou égal à 3,1 et très préférentiellement supérieur à 3,5 permet d'obtenir un monofilament présentant des caractéristiques mécaniques, et notamment une ténacité, particulièrement intéressantes.

À l'issue de l'étape de mise en forme, le fil obtenu présente une ténacité supérieure ou égale à 2,5 cN/tex, préférentiellement supérieure ou égale à 3,0 cN/tex et un allongement à la rupture supérieur ou égal à 10%, mesuré selon la norme ASTM D885-03.

### Méthodes de mesures

### Retrait

La mesure de retrait est réalisée en plaçant le monofilament élémentaire textile ou, le cas échéant, un assemblage de monofilaments élémentaires textiles sous forme d'un fil multifilamentaire, sous une tension de 0,5 cN/tex, puis en mesurant la longueur initiale L₀ du filament à température ambiante, et la longueur L₁ après deux minutes passées à 180°C dans une enceinte préalablement chauffée. Le retrait est calculé selon (L₀-L₁)/L₀, exprimé en %. Cette mesure permet de définir la stabilité dimensionnelle d'un textile. Lors de nombreux usages, il est important que le textile ne se déforme pas lors d'un passage en température (en usage ou lors d'opérations de lavage). Dans ce cas précis, la demanderesse a constaté que le fil obtenu présentait intrinsèquement un très faible retrait, inférieur à 12%, voire inférieur à 10%, avant même une opération supplémentaire de fixation thermique.

### Quantité de fonctions ester situées en bout de chaîne

La mesure de la quantité de fonctions ester situées en bout de chaîne est réalisée par spectroscopie RMN.

Celle-ci est réalisée soit dans l'HFIP-d (hexafluoro-2-propanol deutéré) afin de voir les extrémités de chaînes alcool, soit dans un mélange TFA-d/CDCl3-25/75 vol./vol. pour étudier les extrémités de chaînes ester, les extrémités décarboxylées et déterminer le taux de DEG, où TFA-d représente l'acide trifluoroacétique deutéré, CDCl3 représente le chloroforme deutéré.

Le calcul du % molaire de extrémités de chaînes par motif est calculé de la sorte : $extrémités de chaîne ester par unité de répétition = \frac{\frac{\int signal CH 3 ester}{3}}{\frac{\int signal furanique}{2}} ∗ 100$

Les signaux décarboxylés ne sont pas observables dans le procédé selon l'invention, ils sont donc négligés.

### Méthode de mesure de la teneur en motifs DEG

La mesure de la quantité de motifs DEG est réalisée par spectroscopie RMN.

Une valeur 200 est donnée au signal furanique, intégré entre 7.28 et 7.37 ppm (nombre de protons furaniques pour 100 unités répétitives), puis la formule suivante est appliquée : $% DEG molaire par rapport aux furaniques = \frac{\frac{\int signal CH 2 alpha é ther}{4}}{\frac{\int signal furanique}{2}} ∗ 100$ Ainsi, le %DEG est exprimé pour 100 motifs de répétition.

### Températures de transition vitreuse, de fusion et de cristallisation

Les températures de transition vitreuse Tg, de fusion Tf et de cristallisation sont mesurées de manière connue par calorimétrie différentielle à balayage, ou DSC (Differential Scanning Calorimetry) selon les normes ISO 11357-2 de mars 2020 pour la température de transition vitreuse, et ISO 11357-3 de mars 2018 pour les températures et enthalpies de fusion et cristallisation, la rampe de température appliquée étant la rampe recommandée de 10 K/min.

La Tg, les températures de cristallisation froides et chaudes, le taux de cristallinité et la Tf ont été mesurées par DSC, en effectuant le cycle suivant :
Une montée de 30°C à 280°C, un isotherme de 2 min à 280°C suivi d'une descente en température de 280°C à 30°C, puis un isotherme de 2 min à 30°C, et enfin une dernière montée de 30°C à 280°C. La vitesse a été toujours fixée à 10 °C/min, en montée et en descente.

### Viscosité Intrinsèque (IV)

La mesure de la viscosité intrinsèque (IV) est réalisée en solution, dans un mélange phénol/ortho-dichlorobenzène.

Les polymères sont solubilisés à une concentration C égale à 5 g/L dans un mélange équimassique de phénol/ortho-dichlorobenzène. Afin de favoriser la dissolution, le mélange du solvant et des granulés est placé quelques minutes à 120°C sous vive agitation. Enfin, avant d'être introduite dans le viscosimètre capillaire de type Ubbelohde, la solution est filtrée à l'aide de filtres en PTFE de 0,45 µm.

La mesure de la viscosité intrinsèque (IV) est réalisée à 25°C et calculée à l'aide des formules suivantes : $η \left(intrinsèque\right) = \frac{\sqrt{2}}{C} \times \sqrt{η \left(spécifique\right) - ln \left(η\left(relative\right)\right)}$

Avec C la concentration de la solution en g pour 100mL, et les viscosités spécifiques et relatives calculables par les formules suivantes : $η \left(spécifique\right) = \left(η-η0\right) / η 0$ $η \left(relative\right) = η / η 0$ où η0 correspond à la viscosité du solvant seul et η à la viscosité de la solution macromoléculaire.

### Mesure de la cristallinité du polymère

La cristallinité du polymère est déterminée par la formule : ((ΔHm échantillon - ΔHc échantillon)/ΔHm°)*100 avec ΔHm échantillon, l'enthalpie de fusion en première montée, ΔHc échantillon, l'enthalpie de cristallisation froide en première montée, et ΔHm° l'enthalpie de fusion standard du poly(cyclohexane diméthylène furanoate), noté PCF, et égale à 137 J/g selon la littérature.

### Mesure de type chromatographie d'exclusion stérique (SEC)

Les analyses SEC sont effectuées dans l'hexafluoroisopropanol (HFIP). Les solutions sont préparées à une concentration de 1 mg/mL. Avant l'analyse, les échantillons sont filtrés à l'aide de filtres en PTFE de 0,45 µm.

L'échantillon à analyser est introduit dans des colonnes APC XT à l'aide d'un injecteur d'échantillon automatique (Sample Manager pFTN) et une pompe Waters Acquity Advanced Polymer Chromatography (APC). Un passeur automatique (Sample Manager pFTN) permet de passer à l'échantillon suivant.

### Méthode SEC pour exprimer la Mn en équivalent PMMA :

Les masses molaires sont évaluées au moyen d'un détecteur à indice de réfraction différentiel (détecteur Waters RI) permettant de remonter à la masse molaire relative de nos polymères à partir d'une courbe de calibration construite à partir d'étalons de PMMA à 35°C, l'éluant utilisé étant le hexafluoroisopropanol (HFIP).

### Exemple 1

On alimente une étape de transestérification avec une composition comprenant du diméthylfuranedicarboxylate (DMF) et du 1,4-cyclohexanediméthanol (CHMD) avec un ratio molaire glycol/DMF égal à 1,15. Cette composition est mise en présence de 200 ppm de catalyseur tétrabutoxyde de titane (TBT).

L'étape de transestérification est opérée à 1,7 bar avec une température évoluant de 180°C à 260°C avec une rampe de température de +4°C/min pendant 20 min, la température la plus élevée étant maintenue une fois atteinte jusqu'à ce que le taux de transestérification soit de 90%.

On obtient à l'issue de cette étape un prépolymère dans lequel la présence de motif DEG n'est pas détectable. Le taux de transestérification est de 90%.

La pression du milieu réactionnel est ensuite abaissée graduellement en maintenant la température à 260°C. Lorsque la pression atteint une valeur de P<200 mbar, la température est augmentée à 280°C en 20 min. Après 1h30 de descente en vide, la pression est inférieure à 1 mbar et la température est maintenue à 280°C pendant 90 min.

À l'issue de l'étape de polycondensation, le polycondensat est refroidi rapidement par mise en contact avec de l'eau et découpé en granulés.

Le polyester PCF obtenu à l'issue de l'étape de polycondensation présente les caractéristiques suivantes :
- Viscosité intrinsèque (IV) : 0.57 dL/g
- Ratio molaire EG/CHDM intégrés : 0:100 mol/mol
- Quantité de fonctions ester situées en bout de chaîne : 11 meq/kg
- Masse molaire moyenne en nombre Mn (équivalent PMMA) : 21100 g/mol
- Masse molaire moyenne en poids Mw (équivalent PMMA) : 40090 g/mol
- Dispersité (D) : 1.9
- Température de fusion : 271°C

Les granulés obtenus sont ensuite séchés pendant 5 h à 100°C puis sont traités dans une étape de cristallisation dans laquelle ils sont portés à une température de 130°C pendant 30 min.

A l'issue de la cristallisation, on met en œuvre une étape de post-condensation à l'état solide en portant les granulés à une température de 225°C pendant 25 h sous flux d'azote.

Le polyester obtenu à l'issue de cette étape présente les caractéristiques suivantes :
- Viscosité intrinsèque (IV) : 0.81 dL/g
- Température de transition vitreuse : 90.6°C
- Température de fusion : 258.4°C
- Enthalpie de fusion : 68.3 J/g
- Masse molaire moyenne en poids Mw (équivalent PMMA) : 60000 g/mol
- Masse molaire moyenne en nombre Mn (équivalent PMMA) : 27200 g/mol
- Dispersité : 2.2

### Exemple 2

On alimente une étape de transestérification avec une composition comprenant du diméthylfuranedicarboxylate (DMF), de l'éthylène glycol (EG) et du 1,4-cyclohexanediméthanol (CHMD) avec un ratio molaire glycol/DMF égal à 1,2 et un ratio molaire EG/CHDM égal à 15/85 mol/mol. Cette composition est mise en présence de 200 ppm de catalyseur tétrabutoxyde de titane (TBT).

L'étape de transestérification est opérée à 6.8 bar avec une température évoluant de 180°C à 260°C avec une rampe de température de +4°C/min pendant 20 min, la température la plus élevée étant maintenue une fois atteinte jusqu'à ce que le taux de transestérification soit de 90%.

On obtient à l'issue de cette étape un prépolymère dans lequel la présence de motif DEG n'est pas détectable. Le taux de transestérification est supérieur à 90%.

La pression du milieu réactionnel est ensuite abaissée graduellement en maintenant la température à 260°C. Lorsque la pression atteint une valeur de P<200 mbar, la température est augmentée à 280°C en 20 min. Après 1h30 de descente sous vide, la pression est inférieure à un mbar et la température sera maintenue à 280°C pendant 30 min.

À l'issue de l'étape de polycondensation, le polycondensat est refroidi rapidement par mise en contact avec de l'eau et découpé en granulés.

Le polyester PECF obtenu à l'issue de l'étape de polycondensation présente les caractéristiques suivantes :
- Viscosité intrinsèque (IV) : 0.62 dL/g
- Ratio molaire EG/CHDM intégrés : 4:96 mol/mol
- Quantité de fonctions ester situées en bout de chaîne : 8meq/kg
- Masse molaire moyenne en nombre Mn (équivalent PMMA) : 22 000 g/mol
- Masse molaire moyenne en poids Mw (eq. PMMA) : 39 600 g/mol
- Dispersité (D) : 1.8
- Température de transition vitreuse : 81.4°C
- Température de cristallisation froide: 130°C
- Enthalpie de cristallisation : 30 J/g
- Taux de cristallinité : 14%
- Température de fusion : 265 °C
- Enthalpie de fusion : 49 J/g

Les granulés obtenus sont ensuite séchés pendant 5 h à 100°C puis sont traités dans une étape de cristallisation dans laquelle ils sont portés à une température de 220°C pendant 20 min.

A l'issue de la cristallisation, on met en œuvre une étape de post-condensation à l'état solide en portant les granulés à une température de 235°C pendant 20 h sous flux d'azote.

Le polyester obtenu à l'issue de cette étape présente les caractéristiques suivantes :
- Viscosité intrinsèque (IV) : 0.83 dL/g
- Température de transition vitreuse : 89 °C
- Température de fusion : 257 °C et 265°C, indiquant qu'une partie de la population obtenue à l'issue de l'étape de polycondensation n'a pas disparue
- Masse molaire moyenne en nombre Mn (équivalent PMMA) : 30 000 g/mol
- Masse molaire moyenne en poids Mw (équivalent PMMA) : 63 000 g/mol
- Dispersité : 2.1
- Enthalpie de fusion : 65 J/g

### Exemple 3

On alimente une étape de transestérification avec une composition comprenant du diméthylfuranedicarboxylate (DMF), de l'éthylène glycol (EG) et du 1,4-cyclohexanediméthanol (CHMD) avec un ratio molaire glycol/DMF égal à 1,2 et un ratio molaire EG/CHDM égal à 20/80 mol/mol. Cette composition est mise en présence de 200 ppm de catalyseur tétrabutoxyde de titane (TBT).

L'étape de transestérification est opérée à 6.8 bar avec une température évoluant de 180°C à 260°C avec une rampe de température de +4°C/min pendant 20 min, la température la plus élevée étant maintenue une fois atteinte jusqu'à ce que le taux de transestérification soit de 90%.

On obtient à l'issue de cette étape un prépolymère dans lequel la présence de motif DEG n'est pas détectable. Le taux de transestérification est supérieur à 90%.

La pression du milieu réactionnel est ensuite abaissée graduellement en maintenant la température à 260°C. Lorsque la pression atteint une valeur de P<200 mbar, la température est augmentée à 280°C en 20 min. Après 1h30 de descente sous vide, la pression est inférieure à 1 mbar et la température est maintenue à 280°C pendant 10 min.

À l'issue de l'étape de polycondensation, le polycondensat est refroidi rapidement par mise en contact avec de l'eau et découpé en granulés.

Le polyester PECF obtenu à l'issue de l'étape de polycondensation présente les caractéristiques suivantes :
- Viscosité intrinsèque (IV) : 0.61 dL/g
- Ratio molaire EG/CHDM intégrés : 8:92 mol/mol
- Quantité de fonctions ester situées en bout de chaîne : 17meq/kg
- Masse molaire moyenne en nombre Mn (équivalent PMMA) : 22 500 g/mol
- Masse molaire moyenne en poids Mw (équivalent PMMA) : 40500 g/mol
- Dispersité (D) : 1.8
- Température de transition vitreuse : 78°C
- Température de fusion : 258 °C

Les granulés obtenus sont ensuite séchés pendant 5 h à 100°C puis sont traités dans une étape de cristallisation dans laquelle ils sont portés à une température de 220°C pendant 20 min.

A l'issue de la cristallisation, on met en œuvre une étape de post-condensation à l'état solide en portant les granulés à une température de 232°C pendant 14 h sous flux d'azote.

Le polyester obtenu à l'issue de cette étape présente les caractéristiques suivantes :
- Viscosité intrinsèque (IV) : 0.83 dL/g
- Température de transition vitreuse : 87 °C
- Température de fusion : 249 °C, et 258°C, indiquant qu'une partie de la population obtenue à l'issue de l'étape de polycondensation n'a pas disparue
- Enthalpie de fusion : 57.5 J/g
- Masse molaire moyenne en nombre Mn : 27 700 g/mol
- Masse molaire moyenne en poids Mw : 55 400 g/mol
- Dispersité : 2.2

### Exemple 4

On alimente une étape de transestérification avec une composition comprenant du diméthylfuranedicarboxylate (DMF), de l'éthylène glycol (EG) et du 1,4-cyclohexanediméthanol (CHMD) avec un ratio molaire glycol/DMF égal à 1,2 et un ratio molaire EG/CHDM égal à 25/75 mol/mol. Cette composition est mise en présence de 200 ppm de catalyseur tétrabutoxyde de titane (TBT).

L'étape de transestérification est opérée à 6.8 bar avec une température évoluant de 180°C à 260°C avec une rampe de température de +4°C/min pendant 20 min, la température la plus élevée étant maintenue une fois atteinte jusqu'à ce que le taux de transestérification soit de 90%.

On obtient à l'issue de cette étape un prépolymère dans lequel la présence de motif DEG n'est pas détectable. Le taux de transestérification est supérieur à 90%.

La pression du milieu réactionnel est ensuite abaissée graduellement en maintenant la température à 260°C. Lorsque la pression atteint une valeur de P<200 mbar, la température est augmentée à 280°C en 20 min Après 1h30 de descente sous vide, le polymère est directement coulé.

À l'issue de l'étape de polycondensation, le polycondensat est refroidi rapidement par mise en contact avec de l'eau et découpé en granulés.

Le polyester PECF obtenu à l'issue de l'étape de polycondensation présente les caractéristiques suivantes :
- Viscosité intrinsèque (IV) : 0.61 dL/g
- Quantité de fonctions ester situées en bout de chaîne : 20 meq/kg
- Ratio molaire EG/CHDM intégrés : 14:86 mol/mol
- Masse molaire moyenne en nombre Mn (équivalent PMMA) : 22300g/mol
- Masse molaire moyenne en poids Mw (équivalent PMMA) : 42 370g/mol
- Dispersité (D) : 1,9
- Température de transition vitreuse : 75°C
- Température de fusion : 248 °C

Les granulés obtenus sont ensuite séchés pendant 5 h à 100°C puis sont traités dans une étape de cristallisation dans laquelle ils sont portés à une température de 220°C pendant 20 min.

A l'issue de la cristallisation, on met en œuvre une étape de post-condensation à l'état solide en portant les granulés à une température de 225°C pendant 14 h sous flux d'azote.

Le polyester obtenu à l'issue de cette étape présente les caractéristiques suivantes :
- Viscosité intrinsèque (IV) : 0.83 dL/g
- Température de transition vitreuse : 84 °C
- Température de fusion : 248 °C
- Enthalpie de fusion : 53.9J/g
- Masse molaire moyenne en nombre Mn (équivalent PMMA) : 27600 g/mol
- Masse molaire moyenne en poids Mw (équivalent PMMA) : 58 000 g/mol
- Dispersité : 2.1

### Exemple 5 - Filage des polyesters obtenus aux exemples 1 à 4

Les essais de filage ont été conduits à partir des 4 matériaux décrits dans les exemples précédents.

Les polymères réalisés tels que décrit dans les exemples 1, 2, 3 et 4 ci-dessus sont mis en forme en extrusion-filage-étirage en ligne sous la forme d'un fil (monofilament) avec les caractéristiques procédé suivantes :
- une température au niveau de la filière de 275°C à 280°C
- une vitesse de la première paire de godets de réception de variant entre 300 et 600 m par minute
- une vitesse de bobinage après étirage entre 1500 et 1800m/min
- le rapport entre ces 2 vitesses induisant un taux d'étirage allant de 3 à 5
- les températures des godets allant de 105 à 145°C pour les trois première paires et de 45°C à 75°C pour la quatrième paire.

Les résultats obtenus pour différentes conditions sont résumés dans le tableau 1 ci-dessous. Les exemples 11, 12, 13 sont réalisés à partir du polymère réalisé tel que décrit dans l'exemple 1, les exemples 21,22, 23 à partir du polymère décrit dans l'exemple 2, les exemples 31, 32, 33, 34 et 35 à partir du polymère décrit dans l'exemple 3 et les exemples 41, 42, 43 et 44 à partir du polymère décrit dans l'exemple 4.

**[Tableau 1]**

| Exemple | T filage (°C) | Vitesse paire de godet 1 (m/min) | Vitesse paire de godet 5 (m/min) | étirage | T paire 2 (°C) | T paire 3 (°C°) | T paire 4 (°C) | T paire 5 (°C) |
|---|---|---|---|---|---|---|---|---|
| 11 comparatif | 280 | 500 | 1500 | 3 | 105 | 105 | 105 | 45 |
| 12 | 275 | 450 | 1800 | 4 | 120 | 120 | 105 | 45 |
| 13 | 275 | 419 | 1800 | 4,3 | 125 | 125 | 105 | 45 |
| 21 Comparatif | 280 | 500 | 1500 | 3 | 125 | 125 | 105 | 45 |
| 22 | 280 | 375 | 1500 | 4 | 125 | 125 | 105 | 45 |
| 23 | 280 | 375 | 1500 | 4 | 125 | 145 | 105 | 75 |
| 31 Comparatif | 280 | 500 | 1500 | 3 | 125 | 125 | 105 | 45 |
| 32 | 280 | 375 | 1500 | 4 | 125 | 125 | 105 | 45 |
| 33 | 280 | 333 | 1500 | 4,5 | 125 | 125 | 105 | 45 |
| 34 | 280 | 333 | 1500 | 4,5 | 125 | 125 | 145 | 45 |
| 35 | 280 | 333 | 1500 | 4,5 | 125 | 145 | 145 | 75 |
| 41 Comparatif | 280 | 500 | 1500 | 3 | 125 | 125 | 105 | 45 |
| 42 | 280 | 375 | 1500 | 4 | 125 | 125 | 105 | 45 |
| 43 | 280 | 316 | 1500 | 4.75 | 125 | 125 | 105 | 45 |
| 44 | 280 | 300 | 1500 | 5 | 125 | 145 | 105 | 45 |

Après filage dans les conditions décrites ci-dessus, les brins sont caractérisés. Les résultats sont présentés dans le tableau 2 ci-dessous.

**[Tableau 2]**

| Exemple | Ténacité cN/dtex | Allongement rupture (%) | Retrait à 180°C, 2' (%) |
|---|---|---|---|
| 11 comparatif | 1,8 | 36 | 12 |
| 12 | 2,7 | 15 | 9 |
| 13 | 2,8 | 16 | 9 |
| 21 comparatif | 2,0 | 46 | 0 |
| 22 | 2,8 | 21 | 10 |
| 23 | 2,9 | 20 | 3 |
| 31 comparatif | 1,9 | 57 | 7 |
| 32 | 2,8 | 25 | 10 |
| 33 | 3,1 | 16 | 12 |
| 34 | 3,2 | 17 | 11 |
| 35 | 3,2 | 17 | 10 |
| 41 comparatif | 1,7 | 70 | -9 |
| 42 | 2,5 | 27 | 9 |
| 43 | 3 | 16 | 11 |
| 44 | 3,3 | 17 | 11 |

Il apparaît que, pour les essais réalisés à partir des 4 exemples de polymère avec des rapports molaires en diol EG/CHDM de 0:100, 4:96, 8:92, 14:86, il est possible d'obtenir des multibrins présentant une ténacité supérieure ou égale à 2,5 cN/dtex si l'on applique un taux d'étirage supérieur à 3. Ces caractéristiques permettent d'obtenir un multifilament de haute température de fusion (>240°C), comprenant un monomère furanique biosourçable et utilisable dans l'industrie textile et qui présente l'avantage d'une bonne tenue mécanique, d'un fort allongement et d'un faible retrait thermique.

## Revendications

1. Monofilament élémentaire textile constitué d'un polyester de formule (I) 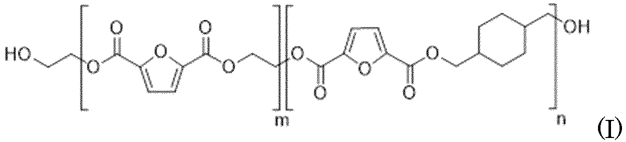 dans laquelle m représente le nombre total de motifs éthylène glycol furanedicarboxylate et n le nombre total de motifs cyclohexanediméthanol furanedicarboxylate avec n non nul, m+n ≥ 25, le ratio molaire entre les motifs éthylène glycol noté EG et les motifs cyclohexanediméthanol noté CHDM allant de 0:100 mol/mol à 20:80 mol/mol, ledit monofilament élémentaire textile présentant une température de fusion Tf supérieure ou égale à 240°C mesurée selon la norme ISO 11357-3, une ténacité supérieure ou égale à 2,5 cN/tex et un allongement à rupture supérieur ou égal à 10% mesuré selon la norme ASTM D885-03, et dans lequel le polyester présente une masse molaire moyenne en poids supérieure à 45 000 g/mol en équivalent PMMA, préférentiellement supérieure à 55 000 g/mol mesuré par méthode SEC.

2. Monofilament élémentaire textile selon la revendication précédente dans lequel le polyester présente une viscosité intrinsèque supérieure à 0,7 dL/g, très préférentiellement supérieure à 0,8 dL/g.

3. Monofilament élémentaire textile selon l'une quelconque des revendications précédentes présentant une ténacité supérieure ou égale à 3 cN/tex et un allongement à rupture supérieur ou égal à 15%.

4. Monofilament élémentaire textile selon l'une quelconque des revendications précédentes présentant un retrait inférieur à 14%, préférentiellement inférieur à 12%.

5. Tissu comprenant au moins un monofilament élémentaire textile selon l'une quelconque des revendications précédentes.

6. Procédé de préparation d'un monofilament élémentaire textile constitué d'un polyester comprenant successivement :
• Une étape de transestérification d'une composition comprenant un composé de type furanedicarboxylate, noté RFC, de formule générale (II) 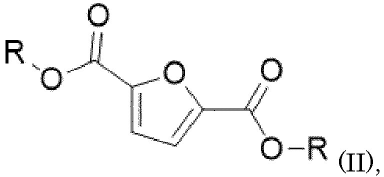 dans laquelle R représente un groupe alkyle comprenant de 1 à 3 atomes de carbone ou l'atome d'hydrogène, la composition comprenant également au moins un composé glycol choisi parmi le 1,4-cyclohexane diméthanol et le mélange de 1,4-cyclohexane diméthanol et d'éthylène glycol, cette étape de transestérification étant opérée à une température croissant selon une rampe d'au moins 1°C/min dans l'intervalle allant de 180°C à 280°C, avec un ratio molaire composés glycol/RFC allant de 1,1 à 2, préférentiellement allant de 1,1 à 1,2, en présence d'un catalyseur acide de Lewis ;
• Une étape de polycondensation en milieu fondu opérée à une température supérieure ou égale à 260°C et une pression inférieure à 50 mbar de manière à obtenir un polyester, le 1,4-cyclohexane diméthanol étant présent dans la composition de l'étape de transestérification à une teneur telle que le ratio molaire entre les motifs éthylène glycol et les motifs cyclohexanediméthanol dans le polyester à l'issue de l'étape de polycondensation vont de 0 :100 mol/mol et 20 :80 mol/mol ;
• Une étape de filage du polyester afin d'obtenir un monofilament élémentaire textile.

7. Procédé selon la revendication précédente dans lequel, dans l'étape de transestérification, la température croît continûment dans l'intervalle allant de 180°C à 280°C selon une rampe inférieure ou égale à +5°C/min.

8. Procédé selon l'une quelconque des revendications 6 à 7 dans lequel le catalyseur utilisé dans l'étape de transestérification est choisi parmi l'acétylacétonate d'hafnium, l'acétylacétonate de zirconium, le tétraisopropoxyde de titane et le tétrabutoxyde de titane, et préférentiellement est le tétrabutoxyde de titane.

9. Procédé selon l'une quelconque des revendications 6 à 8 dans lequel l'étape de polycondensation est opérée à une température supérieure ou égale à 270°C, de préférence supérieure ou égale à 280°C.

10. Procédé selon l'une quelconque des revendications 6 à 9 dans lequel on procède, suite à l'étape de polycondensation, à une étape de mise en forme dans lequel le polyester est refroidi rapidement par mise en contact avec de l'eau puis découpé en granulés, puis séché à une température allant de 80°C à 100°C à pression inférieure ou égale à la pression atmosphérique sous atmosphère inerte.

11. Procédé selon la revendication précédente dans lequel, suite à l'étape de mise en forme, on réalise une étape de cristallisation opérée, lorsque la composition alimentant l'étape de transestérification ne comprend pas d'éthylène glycol, à une température allant de 120°C à la température de fusion du polyester, préférentiellement allant de 130°C à 150°C et une durée allant de 15 min à 2 h et opérée, lorsque la composition alimentant l'étape de transestérification comprend de l'éthylène glycol, à une température allant de 220°C à la température de fusion du polyester, préférentiellement allant de 220°C à 230°C et une durée allant de 10 min à 2 h puis une étape de post-condensation en phase solide opérée à une température croissant dans l'intervalle allant de 200°C à 260°C et une durée allant de 1 à 60 h.

12. Procédé selon la revendication précédente dans lequel l'étape de post-condensation en phase solide est opérée à une température croissant dans l'intervalle allant de 210°C à 260°C, préférentiellement dans l'intervalle allant de 220°C à 250°C pendant une durée allant de 24 h à 72 h, préférentiellement de 10 h à 60 h sous flux de gaz inerte.

13. Procédé selon l'une quelconque des revendications 6 à 12 dans lequel l'étape de filage, mise en œuvre en tant que dernière étape dudit procédé, est réalisée à une température supérieure à la température de fusion du polyester, ajustée de sorte que la pression en entrée de filière soit comprise entre 3,3 et 10,0 MPa, suivie d'une étape d'étirage sur une série de godets d'étirages, chaque godet d'étirage étant à une température allant de 40°C à 160°C, le taux d'étirage allant de 3 à 6.

## Patentansprüche

1. Elementares Textilmonofilament, das aus einem Polyester der folgenden Formel (I) besteht 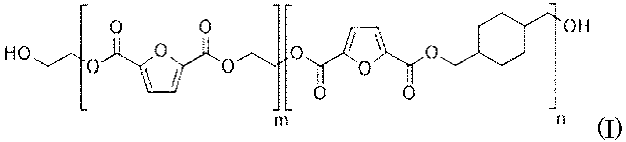 wobei m für die Gesamtzahl an Ethylenglykolfurandicarboxylat-Bausteinen und n für die Gesamtzahl an Cyclohexandimethanolfurandicarboxylat-Bausteinen steht, wobei n ungleich null ist und m+n ≥ 25 ist, wobei das Molverhältnis zwischen den mit EG bezeichneten Ethylenglykol-Bausteinen und den mit CHDM bezeichneten Cyclohexandimethanol-Bausteinen im Bereich von 0:100 mol/mol bis 20:80 mol/mol liegt, wobei das elementare Textilmonofilament eine Schmelztemperatur Tf von mindestens 240 °C, gemessen nach der Norm ISO 11357-3, eine Zugfestigkeit von mindestens 2,5 cN/tex und eine Reißdehnung von mindestens 10 %, gemessen nach der Norm ASTM D885-03, aufweist, und wobei das Polyester ein Gewichtsmittel der Molmasse von mehr als 45.000 g/mol in PMMA-Äquivalenten, vorzugsweise von mehr als 55.000 g/mol, gemessen mittels der SEC-Methode, aufweist.

2. Elementares Textilmonofilament nach dem vorhergehenden Anspruch, wobei das Polyester eine intrinsische Viskosität von mehr als 0,7 dL/g, stark bevorzugt von mehr als 0,8 dL/g, aufweist.

3. Elementares Textilmonofilament nach einem beliebigen der vorhergehenden Ansprüche, wobei es eine Zugfestigkeit von mindestens 3 cN/tex und eine Reißdehnung von mindestens 15 % aufweist.

4. Elementares Textilmonofilament nach einem beliebigen der vorhergehenden Ansprüche, wobei es eine Schrumpfung von weniger als 14 %, vorzugsweise von weniger als 12 % zeigt.

5. Gewebe, das mindestens ein elementares Textilmonofilament nach einem beliebigen der vorhergehenden Ansprüche umfasst.

6. Verfahren zur Herstellung eines elementaren Textilmonofilaments, das aus einem Polyester besteht, nacheinander Folgendes umfassend:
• einen Schritt des Umesterns einer Zusammensetzung, die eine Verbindung vom Typ Furandicarboxylat, bezeichnet als RFC, nach der folgenden allgemeinen Formel (II) umfasst 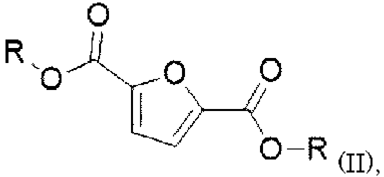 wobei R für eine Alkylgruppe, die 1 bis 3 Kohlenstoffatome umfasst, oder für das Wasserstoffatom steht, wobei die Zusammensetzung weiterhin mindestens eine Glykolverbindung umfasst, die aus 1,4-Cyclohexandimethanol und der Mischung von 1,4-Cyclohexandimethanol und Ethylenglykol ausgewählt ist, wobei dieser Umesterungsschritt bei einer Temperatur betrieben wird, die innerhalb des Intervalls von 180 °C bis 280 °C mit einer Steigungsrate von mindestens 1 °C/min zunimmt, wobei des Molverhältnis der Verbindungen Glykol/RFC im Bereich von 1,1 bis 2, vorzugsweise im Bereich von 1,1 bis 1,2 liegt, in Gegenwart eines Lewissäure-Katalysators;
• einen Schritt der Polykondensation in der Schmelze, der bei einer Temperatur von mindestens 260 °C und einem Druck von weniger als 50 mbar derart betrieben wird, dass ein Polyester erhalten wird, wobei das 1,4-Cyclohexandimethanol in der Zusammensetzung des Umesterungsschritts zu einem derartigen Gehalt vorliegt, dass das Molverhältnis zwischen des Ethylenglykol-Bausteinen und den Cyclohexandimethanol-Bausteinen im Polyester nach Abschluss des Polykondensationsschritts im Bereich von 0:100 mol/mol bis 20:80 mol/mol liegt;
• einen Schritt des Verspinnens des Polyesters, um ein elementares Textilmonofilament zu erhalten.

7. Verfahren nach dem vorhergehenden Anspruch, wobei die Temperatur im Umesterungsschritt innerhalb des Intervalls von 180 °C bis 280 °C mit einer Steigungsrate von höchstens +5 °C/min kontinuierlich zunimmt.

8. Verfahren nach einem beliebigen der Ansprüche 6 bis 7, wobei der Katalysator, der im Umesterungsschritt verwendet wird, aus Hafniumacetylacetonat, Zirconiumacetylacetonat, Titantetraisopropoxid und Titantetrabutoxid ausgewählt ist, wobei es sich vorzugsweise um Titantetrabutoxid handelt.

9. Verfahren nach einem beliebigen der Ansprüche 6 bis 8, wobei der Polykondensationsschritt bei einer Temperatur von mindestens 270 °C, vorzugsweise von mindestens 280 °C betrieben wird.

10. Verfahren nach einem beliebigen der Ansprüche 6 bis 9, wobei im Anschluss an den Polykondensationsschritt ein Formgebungsschritt durchgeführt wird, in welchem das Polyester rasch abgekühlt wird, indem es mit Wasser in Kontakt gebracht wird, um es anschließend zu Granulatkörnern zu zerteilen und danach bei einer Temperatur im Bereich von 80 °C bis 100 °C bei einem Druck, welcher gleich dem Atmosphärendruck oder geringer als dieser ist, unter Inertgasatmosphäre zu trocknen.

11. Verfahren nach dem vorhergehenden Anspruch, wobei nach dem Formgebungsschritt ein Kristallisationsschritt durchgeführt wird, wobei dieser, wenn die Zusammensetzung, welche dem Umesterungsschritt zugeführt wird, keinerlei Ethylenglykol umfasst, bei einer Temperatur im Bereich von 120 °C bis zur Schmelztemperatur des Polyesters, vorzugsweise im Bereich von 130 °C bis 150 °C, und über eine Dauer im Bereich von 15 min bis 2 h betrieben wird, und er, wenn die Zusammensetzung, welche dem Umesterungsschritt zugeführt wird, Ethylenglykol umfasst, bei einer Temperatur im Bereich von 220 °C bis zur Schmelztemperatur des Polyesters, vorzugsweise im Bereich von 220 °C bis 230 °C, und über eine Dauer von 10 min bis 2 h betrieben wird, gefolgt von einem Postkondensationsschritt in der Festphase, der bei einer Temperatur, welche innerhalb des Intervalls von 200 °C bis 260 °C zunimmt, und über eine Dauer von 1 bis 60 h betrieben wird.

12. Verfahren nach dem vorhergehenden Anspruch, wobei der Postkondensationsschritt in der Festphase bei einer Temperatur, die im Intervall von 210 °C bis 260 °C, vorzugsweise im Intervall von 220 °C bis 250 °C zunimmt, über eine Dauer im Bereich von 24 h bis 72 h, vorzugsweise von 10 h bis 60 h, unter einem Inertgasstrom betrieben wird.

13. Verfahren nach einem beliebigen der Ansprüche 6 bis 12, wobei der Schritt des Verspinnens, welcher als letzter Schritt des Verfahrens umgesetzt wird, bei einer Temperatur durchgeführt wird, die höher als die Schmelztemperatur des Polyesters ist, wobei er derart eingestellt wird, dass der eingangsseitige Düsendruck im Bereich von 3,3 bis 10,0 MPa liegt, gefolgt von einem Schritt des Streckens auf einer Reihe von Streckmulden, wobei jede Streckmulde eine Temperatur im Bereich von 40 °C bis 160 °C aufweist, wobei der Streckgrad im Bereich von 3 bis 6 liegt.

## Claims

1. Textile elementary monofilament consisting of a polyester of formula (I) 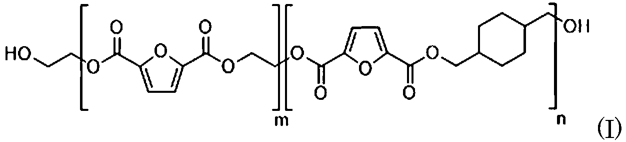 in which m represents the total number of ethylene glycol furandicarboxylate units and n the total number of cyclohexanedimethanol furandicarboxylate units with n non-zero, m+n ≥ 25, the mole ratio between the ethylene glycol units denoted EG and the cyclohexanedimethanol units denoted CHDM ranging from 0/100 mol/mol to 20/80 mol/mol, said textile elementary monofilament having a melting point Tm of greater than or equal to 240°C, a tenacity of greater than or equal to 2.5 cN/tex and an elongation at break of greater than or equal to 10% measured according to ASTM Standard D885-03, and in which the polyester has a weight-average molar mass of greater than 45 000 g/mol in PMMA equivalent, preferentially greater than 55 000 g/mol measured according to SEC method.

2. Textile elementary monofilament according to the preceding claim, in which the polyester has an intrinsic viscosity of greater than 0.7 dL/g, very preferentially greater than 0.8 dL/g.

3. Textile elementary monofilament according to any one of the preceding claims, having a tenacity of greater than or equal to 3 cN/tex and an elongation at break of greater than or equal to 15%.

4. Textile elementary monofilament according to any one of the preceding claims, having a shrinkage of less than 14%, preferentially less than 12%.

5. Fabric comprising at least one textile elementary monofilament according to any one of the preceding claims.

6. Process for preparing a textile elementary monofilament consisting of a polyester, comprising successively:
• A step of trans esterification of a composition comprising a compound of furandicarboxylate type, denoted RFC, of general formula (II) 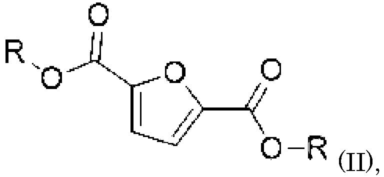 in which R represents an alkyl group comprising from 1 to 3 carbon atoms or a hydrogen atom, the composition also comprising at least one glycol compound chosen from 1,4-cyclohexanedimethanol and the mixture of 1,4-cyclohexanedimethanol and ethylene glycol, this transesterification step being performed at a temperature increasing with a ramp of at least 1°C/min in the range from 180°C to 280°C, with a glycol compound/RFC mole ratio ranging from 1.1 to 2, preferentially ranging from 1.1 to 1.2, in the presence of a Lewis acid catalyst;
• A melt polycondensation step performed at a temperature of greater than or equal to 260°C and a pressure of less than 50 mbar so as to obtain a polyester, the 1,4-cyclohexanedimethanol being present in the composition of the transesterification step in a content such that the mole ratio between the ethylene glycol units and the cyclohexanedimethanol units in the polyester on conclusion of the polycondensation step ranges from 0/100 mol/mol to 20/80 mol/mol;
• A step of spinning the polyester so as to obtain a textile elementary monofilament.

7. Process according to the preceding claim, in which, in the transesterification step, the temperature rises continuously in the range from 180°C to 280°C at a ramp of less than or equal to +5°C/min.

8. Process according to either of Claims 6 and 7, in which the catalyst used in the transesterification step is chosen from hafnium acetylacetonate, zirconium acetylacetonate, titanium tetraisopropoxide and titanium tetrabutoxide, and preferentially is titanium tetrabutoxide.

9. Process according to any one of Claims 6 to 8, in which the polycondensation step is performed at a temperature of greater than or equal to 270°C, preferably greater than or equal to 280°C.

10. Process according to any one of Claims 6 to 9, in which, following the polycondensation step, a forming step is performed, in which the polyester is rapidly cooled by placing in contact with water, then cut into granules, then dried at a temperature ranging from 80°C to 100°C at a pressure less than or equal to atmospheric pressure under an inert atmosphere.

11. Process according to the preceding claim, in which, following the forming step, a crystallization step is performed, when the composition used in the transesterification step does not comprise ethylene glycol, at a temperature ranging from 120°C to the melting point of the polyester, preferentially ranging from 130°C to 150°C, and for a time ranging from 15 min to 2 h, and performed when the composition used in the transesterification step comprises ethylene glycol, at a temperature ranging from 220°C to the melting point of the polyester, preferentially ranging from 220°C to 230°C and for a time ranging from 10 min to 2 h, followed by a solid-phase post-condensation step performed at a temperature increasing in the range from 200°C to 260°C and for a time ranging from 1 to 60 h.

12. Process according to the preceding claim, in which the solid-phase post-condensation step is performed at a temperature increasing in the range from 210°C to 260°C, preferentially in the range from 220°C to 250°C, for a time ranging from 24 h to 72 h, preferentially from 10 h to 60 h, under a flow of inert gas.

13. Process according to any one of Claims 6 to 12, in which the spinning step, performed as the last step of said process, is performed at a temperature above the melting point of the polyester, adjusted so that the pressure at the die inlet is between 3.3 and 10.0 MPa, followed by a drawing step on a series of drawing cups, each drawing cup being at a temperature ranging from 40°C to 160°C, the draw ratio ranging from 3 to 6.
